# EUROPÄISCHE PATENTSCHRIFT

(11) **EP 3 461 717 B1**
(45) Veröffentlichungstag und Bekanntmachung des Hinweises auf die Patenterteilung: **08.09.2021**
(21) Anmeldenummer: 18196545.0
(22) Anmeldetag: 25.09.2018
(51) Int. Cl.: B60B 39/10, B60T 1/14, B61L 15/00, B61H 7/00

(54) **STEUERUNGSVORRICHTUNG ZUM EINBAUEN IN EIN SCHIENENFAHRZEUG UND ZUM BETÄTIGEN VON EINRICHTUNGEN IN EINEM SCHIENENFAHRZEUG, SOWIE EIN SCHIENENFAHRZEUG MIT EINER STEUERUNGSVORRICHTUNG**
CONTROL DEVICE TO BE INSTALLED IN A RAIL VEHICLE AND FOR ACTUATING OF DEVICES IN A RAIL VEHICLE AND A RAIL VEHICLE WITH A CONTROL DEVICE
DISPOSITIF DE COMMANDE DESTINÉ À L'INSTALLATION DANS UN VÉHICULE FERROVIAIRE ET À LA COMMANDE DES DISPOSITIFS DANS UN VÉHICULE FERROVIAIRE AINSI QUE VÉHICULE FERROVIAIRE DOTÉ D'UN DISPOSITIF DE COMMANDE

(30) Priorität: 29.09.2017 DE 102017122762
(43) Veröffentlichungstag der Anmeldung: 03.04.2019
(73) Patentinhaber: Bombardier Transportation GmbH, 10785 Berlin (DE)
(72) Erfinder: Birnbreier, Thomas, 76185 Karlsruhe (DE); Weisbrodt, Oliver, 68259 Mannheim (DE)
(74) Vertreter: Zimmermann & Partner Patentanwälte mbB

(56) Entgegenhaltungen:
- WO-A1-2013/034694
- DE-A1-102011 113 071
- DE-U1-202007 009 724

## Beschreibung

### Technisches Gebiet

Die Erfindung liegt auf dem Gebiet der Schienenfahrzeug und der elektronischen Betätigung von Einrichtungen und Funktionen in einem Schienenfahrzeug, wie zum Beispiel Bremsen oder Beleuchtung, und betrifft eine Steuerungsvorrichtung zum Einbauen in ein Schienenfahrzeug und zum Betätigen von Einrichtungen in einem Schienenfahrzeug, sowie ein Schienenfahrzeug mit einer Steuerungsvorrichtung.

### Vorbekannter Stand der Technik

Fahrzeugfunktionen wie Bremsen oder Beleuchtungen wurden bisher über konventionellen Schaltgeräte, zum Beispiel Relais, oder über eine zentrale Fahrzeugsteuerung betätigt. Diese Steuervorrichtungen sind meistens über das Schienenfahrzeug an mehreren Orten verteilt.

Beispielsweise beschreibt WO 2013/034735 A2 eine Bremssteuereinrichtung für eine Bremsanlage eines Schienenfahrzeugs.

Eine Steuervorrichtung für ein Beleuchtungssystem für Schienenfahrzeuge is dagegen in EP 2 657 084 A1 beschrieben.

Die verschiedenen Fahrzeugfunktionen können beispielsweise zentral von einem zentralen Fahrerpult, wie beispielsweise in WO 2015/197479 A1 beschrieben angesteuert werden.

Die Druckschrift DE 102011113071 A1 beschreibt eine Steuereinrichtung für eine Partikelstreuanlage eines Schienenfahrzeuges.

### Nachteile des Standes der Technik

Die Geräteträger konventioneller Schaltungstechnik zur Steuerung verschiedener Fahrzeugeinrichtungen und -funktionen sind platzeinnehmend und über das Schienenfahrzeug verteilt. Außerdem ist deren Ansteuerung aufwendig, da eine verteilte Ansteuerung erforderlich ist.

### Problemstellung

Die Aufgabe besteht darin, den Aufbau der Steuervorrichtungen zu verbessern.

### Erfindungsgemäße Lösung

Diese Aufgabe wird durch eine Steuerungsvorrichtung zum Einbauen in ein Schienenfahrzeug nach Anspruch 1 gelöst. Weiterhin wird diese Aufgabe durch ein Schienenfahrzeug mit einer Steuerungsvorrichtung nach Anspruch 15 gelöst.

Es wird eine Steuerungsvorrichtung zum Einbauen in ein Schienenfahrzeug und zum Betätigen von Einrichtungen in dem Schienenfahrzeug vorgeschlagen. Die Steuerungsvorrichtung weist ein Gehäuse und mindestens zwei in dem Gehäuse angeordnete Steuerungsmodule auf. Jedes Steuerungsmodul weist: mindestens einen Schalteingang; eine mit dem Schalteingang verbundene Logikeinheit, die ein Signal an dem Schalteingang logisch verarbeiten kann; eine mit der Logikeinheit verbundene und durch die Logikeinheit steuerbare Halbleiter-Leistungsschaltvorrichtung; mindestens einen mit der Halbleiter-Leistungsschaltvorrichtung verbundenen Leistungsausgang, wobei das erste Steuerungsmodul über den Leistungsausgang mit einer ersten Einrichtung des Schienenfahrzeuges verbindbar ist und ausgebildet ist, diese zu steuern und zu betätigen, wobei das zweite Steuerungsmodul über den Leistungsausgang mit einer zweiten Einrichtung des Schienenfahrzeuges verbindbar ist und ausgebildet ist, diese zu steuern und zu betätigen, und wobei die erste Einrichtung eine Sandung ist und die zweite Einrichtung eine Schienenbremse ist.

Schienenfahrzeuge, wie zum Beispiel Straßenbahnen, Metros, elektrische Lokomotiven oder Hochgeschwindigkeitszüge, weisen Einrichtungen für verschiedene Funktionen im Schienenfahrzeug auf. Diese Einrichtungen oder Funktionen können beispielsweise sein: die Schienenbremse, die Sandung, die Federspeicherbremse, die Notauslösevorrichtung der Federspeicherbremse oder die Innenbeleuchtung. Diese Einrichtungen sind elektrisch oder elektromechanisch betätigbar und steuerbar. Die Steuerungsvorrichtung weist mindestens zwei Steuerungsmodule auf, wobei das erste zum Steuern und Betätigen der Sandung ausgebildet ist und das zweite zum Steuern und Betätigen der Schienenbremse ausgebildet ist. Die Steuerungsvorrichtung kann weitere Steuerungsmodule zum Steuern und Betätigen weiterer Einrichtungen aufweisen.

Gemäß einer Ausführungsform weist die Steuerungsvorrichtung mindestens ein drittes in dem Gehäuse angeordnetes Steuerungsmodul auf. Das dritte Steuerungsmodul ist über seinen Leistungsausgang mit einer dritten Einrichtung eines Schienenfahrzeuges verbindbar und ausgebildet, diese zu steuern und zu betätigen. Die dritte Einrichtung ist eine der folgenden: die Federspeicherbremse, die Notauslösevorrichtung der Federspeicherbremse oder die Innenbeleuchtung.

Gemäß einer Ausführungsform kann die Steuerungsvorrichtung ein viertes in dem Gehäuse angeordnetes Steuerungsmodul aufweisen. Das vierte Steuerungsmodul ist über seinen Leistungsausgang mit einer vierten Einrichtung eines Schienenfahrzeuges verbindbar und ausgebildet, diese zu steuern und zu betätigen. Die vierte Einrichtung ist eine der folgenden: die Federspeicherbremse, die Notauslösevorrichtung der Federspeicherbremse oder die Innenbeleuchtung, wobei die dritte Steuerungsvorrichtung und die vierte Steuerungsvorrichtung für unterschiedliche Einrichtungen vorgesehen sind.

Über das Steuerungsmodul kann die jeweilige Einrichtung angesteuert werden. Ein Steuern und Betätigen kann ein Schalten zwischen zwei Zuständen, beispielsweise bei der Innenbeleuchtung ein Schalten zwischen Ein und Aus einer Stromversorgung einer Beleuchtungseinrichtung, beinhalten. Ein Steuern und Betätigen kann insbesondere auch ein stetiges und/oder stufenloses Betätigen beispielsweise einer Schienenbremse beinhalten. Das Steuern und Betätigen kann insbesondere die Steuerung des Stromflusses über den Leistungsausgang umfassen.

Die Steuerungsmodule sind in einem Gehäuse angeordnet. Beispielsweise sind die in dem Gehäuse mechanisch befestigt. Weiterhin können die Schalteingänge und die Leistungsausgänge der Steuerungsmodule aus dem Gehäuse geführt werden, beispielsweise durch Steckverbindungen. Weiterhin kann eine Stromversorgung in das Gehäuse zu den Steuerungsmodulen geführt werden.

Gemäß einer Ausführungsform weist ein Steuerungsmodul eine Spannungsversorgung (oder auch Stromversorgung) auf, wobei ein Steuern der Halbleiter-Leistungsschaltvorrichtung eine elektrische Verbindung zwischen der Spannungsversorgung und dem Leistungsausgang steuert. Ein Steuerungsmodul kann ebenso mehrere Spannungsversorgungen aufweisen. Die Anzahl der Spannungsversorgungen hängt von der Anzahl der Leistungsausgänge ab. Verschiedene Steuerungsmodule können eine Unterschiedliche Anzahl von Spannungsversorgungen aufweisen.

Das Gehäuse ist in ein Schienenfahrzeug einbaubar. Es ist kompakt und kann beispielsweise Im Randbereich eines Innenraumes eines Wagenkastens eingebaut werden, ohne die den Platz für Fahrgäste wesentlich zu beschränken.

Jedes Steuerungsmodul weist einen Schalteingang auf. Insbesondere kann jedes Steuerungsmodul mehrere Schalteingänge, beispielsweise 1, 2, 4, oder 8, aufweisen. Die Anzahl der Schalteingänge kann sich bei unterschiedlichen Steuerungsmodulen je nach Anforderung der zu steuernden Einrichtung unterscheiden.

Jedes Steuerungsmodul weist einen Leistungsausgang auf. Insbesondere kann jedes Steuerungsmodul mehrere Leistungsausgänge, beispielsweise 1, 2, 3, 5 oder 9, aufweisen. Die Anzahl der Leistungsausgänge kann sich bei unterschiedlichen Steuerungsmodulen je nach Anforderung der zu steuernden Einrichtung unterscheiden. Die Schienenbremse kann beispielsweise mit zwei Leistungsausgängen angesteuert werden, während die Innenbeleuchtung beispielsweise durch sechs Leistungsausgänge angesteuert werden kann.

An dem Schalteingang kann ein Signal anliegen. Insbesondere kann ein binäres Signal, also ein Signal aus zwei Zuständen, Ein und Aus oder Null und Eins, an dem Schalteingang anliegen. Die Zustände können durch eine Spannungs-, oder Leistungsschwelle am Signaleingang definiert sein.

Mit dem Schalteingang ist eine Logikeinheit verbunden, die das Signal an dem Schalteingang logisch verarbeiten kann. Mit der Logikeinheit ist eine steuerbare Halbleiter Leistungsschaltvorrichtung verbunden und durch die Logikeinheit steuerbar. Die Halbleiter Leistungsschaltvorrichtung ist mit dem Leistungsausgang verbunden. Durch diese Verbindungen beeinflusst ein Signal an dem oder an den Schalteingängen den Stromfluss über den Leistungsausgang. Gemäß einer Ausführungsform ist jedem zulässigen Signal am Schalteingang eines Steuerungsmoduls ein definierter Stromfluss an dem oder an den Leistungsausgängen zugewiesen. Das Verhalten eines Steuerungsmodules kann dadurch durch eine Logiktabelle, die die Spannung beziehungsweise den Strom am Leistungsausgang in Abhängigkeit von dem Eingangssignal am Schalteingang darstellt, beschrieben werden.

Jedes Steuerungsmodul kann weiterhin Eingänge für die Spannungsversorgung aufweisen. Gemäß einem Ausführungsbeispiel werden beim Steuern die Spannungsversorgung und der Leistungsausgang elektrisch leitend verbunden. Die elektrische Verbindung führt über die Halbleiter-Leistungsschaltvorrichtung und wird durch die Logikeinheit und das Signal am Schalteingang gesteuert.

Ein Steuerungsmodul kann ein oder mehrere Eingänge für die Spannungsversorgung aufweisen. Die Anzahl der Spannungsversorgungen hängt von der Anzahl der Leistungsausgänge und der anzuschließenden Einrichtung ab. Die Spannungsversorgungen von zwei Steuerungsmodulen können insbesondere elektrisch unabhängig sein, sodass eine Fehlfunktion an einer Spannungsversorgung in einem Steuerungsmodul nicht auf ein anderes Steuerungsmodul übertragen werden kann.

Ein Steuerungsmodul kann weiterhin ein oder mehrere nicht steuerbare Spannungsein- und -ausgänge aufweisen. Dieser oder diese können das entgegengesetzte Potential zum Leistungsausgang zu Verfügung stellen, damit ein Strom vom Leistungsausgang zur Einrichtung fließen kann.

Gemäß einer Ausführungsform ist der Leistungsausgang eines Steuerungsmoduls unabhängig von den Schalteingängen anderer Steuerungsmodule, das heißt, ein Signale an einem Schalteingang an einem erstem Steuerungsmodul kann den Stromfluss durch den Leistungsausgang an einem anderen Steuerungsmodul nicht beeinflussen. Der Verarbeitungsweg des Signals in der Logikeinheit eines Steuerungsmodules ist von anderen Logikeinheiten anderer Steuerungsmodule elektrisch getrennt.

Gemäß einer Ausführungsform kann ein Steuerungsmodul einen Signalausgang aufweisen. Dieser gibt beispielsweise eine Rückmeldung über einen Zustand der Logikeinheit, wie "Ein" und "Aus" oder "aktiv" und "nicht aktiv" an. Beispielweise kann es vorteilhaft sein, einen Signalausgang für die Innenbeleuchtung vorzusehen, der signalisiert, ob die Innenbeleuchtung aktiviert ist oder nicht.

Gemäß einer Ausführungsform entspricht die Signalverarbeitung in jedem Steuerungsmodul vom dem Schalteingang zu dem Leistungsausgang dem Standard nach EN 50129:2003. Darin werden unter anderem möglichen Topologien zum sicheren Betreiben dargestellt. Beispielsweise kann bei der Signalverarbeitung durch Redundanz oder eine Überwachungsfunktion des Signalweges die Sicherheit nachgewiesen werden.

Gemäß einer Ausführungsform ist in jedes Steuerungsmodul eine Überwachungsfunktion integriert, die die Plausibilität des Signales an dem jeweiligen Schalteingang und des dazugehörigen Zustandes des Leistungsausganges überwacht.

Gemäß einer Ausführungsform weißt die Logikeinheit Verknüpfungen aus "UND"- sowie "ODER"-Verbindungen auf. Diese können in diskreten Bauteilen zusammengesetzt und beispielsweise auf eine Platine gelötet werden. Die Logigeinheit kann ebenso integrierte Schaltkreise aufweisen, beispielsweise Field Programmable Gate Array (FPGA) oder einen Microcontroller.

Gemäß einer Ausführungsform ist die Logikeinheit aus fest verdrahteten Logikgattern aufgebaut. Die Logikgatter sind beispielsweise auf eine Platine aufgelötet. Durch eine Hardware-basierte Logik wird im Vergleich zu einer Software-basierten Logik die Fehleranfälligkeit verringert. Dadurch werden Sicherheitsstandards für die Ansteuerung der Einrichtungen im Schienenfahrzeug erfüllt. Entsprechend der Gatter wird ein Eingangssignal am Schalteingang verarbeitet und der Stromfluss durch den Leistungsausgang gesteuert.

Gemäß einer Ausführungsform weisen die Steuerungsmodule jeweils separate Platinen auf, auf denen die Logikeinheiten aufgebracht sind. Das ermöglicht vorteilhaft die Austauschbarkeit von Steuerungsmodulen. Des Weiteren sind die Steuerungsmodule dadurch elektrisch unabhängig voneinander, wodurch beispielsweise ein elektrischer Defekt oder ein fehlerhaftes Signal in einem Steuerungsmodul nicht auf ein anderes Steuerungsmodul übertragen wird.

Die Halbleiter-Leistungsschaltvorrichtung kann beispielsweise einen Leistungs-MOSFET oder einen IGBT aufweisen. Unterschiedliche Steuerungsmodule können gleich oder unterschiedlich ausgestaltet sein, sodass die Halbleiter-Leistungsschaltvorrichtung eines Steuerungsmodules beispielsweise einen Leistungs-MOSFET aufweist und die Halbleiter-Leistungsschaltvorrichtung eines anderen Steuerungsmodules beispielsweise einen IGBT aufweist.

Die Halbleiter-Leistungsschaltvorrichtung kann eine Gatesteuerung aufweisen und die Logikeinheiten können jeweils über die Gatesteuerungen mit der Halbleiter-Leistungsschaltvorrichtungen verbunden sein und diese über die Gatesteuerungen steuern. Insbesondere bei einem Leistungs-MOSFET oder einen IGBT weist die Halbleiter-Leistungsschaltvorrichtung eine Gatesteuerung auf.

Gemäß einer Ausführungsform weist die Steuerungsvorrichtung eine Kühlvorrichtung zum Kühlen des Innenbereiches des Gehäuses, insbesondere zum Kühlen einer der oder mehrerer steuerbaren Halbleiter-Leistungsschaltvorrichtungen auf. Die Kühlvorrichtung kann eine passive Kühlung, beispielsweise Kühlrippen und/oder eine aktive Kühlung beispielsweise eine Wasserkühlung umfassen. Im Gehäuse entsteht im Betriebszustand Wärme. Insbesondere entsteht Wärme in den Halbleiter-Leistungsschaltvorrichtung, da dort höhere Ströme fließen können als an den Steuerungseingängen. Eine Kühlvorrichtung schützt die Halbleiter-Leistungsschaltvorrichtungen vor Zerstörung durch Hitze.

Gemäß einer Ausführungsform weist das Gehäuse Verbindungselemente nach außen zum elektrischen Verbinden mit einer Einrichtung in einem Schienenfahrzeug auf, an die Leistungsausgänge angeschlossen sind. Die Schalteingänge der Steuerungsmodule und die Spannungsversorgungen können jeweils auch mit Verbindungselement im Innenraum des Gehäuses nach Außen anschließbar sein. Die Schalteingänge und die Leistungsausgänge eines Steuerungsmoduls werden dadurch unabhängig von anderen Steuerungsmodulen aus dem Gehäuse nach Außen geführt. Die Verbindungselemente können Steckverbindungen sein und vorteilhaft eine Steckercodierung aufweisen, sodass der Stecker jeder Einrichtung im Schienenfahrzeug ein-eindeutig jeder Steckverbindung und damit jedem Steuerungsmodul zugeordnet ist. Ein falsches Anschließen einer Einrichtung des Schienenfahrzeuges an einen Leistungsausgang eines Steuerungsmoduls ist dadurch ausgeschlossen. Ebenso ist ein falsches Anschließen an einen Schalteingang beispielsweise einer Fahrzeugleittechnik oder eines Bedienterminals (Hardwareschaltung) durch eine Steckercodierung ausgeschlossen.

Gemäß einer Ausführungsform ist die Steuerungsvorrichtung mit der Fahrzeugleittechnik eines Schienenfahrzeuges verbindbar und einerseits über diese steuerbar, wobei die Steuerungsvorrichtung weiterhin eine Hardwareschaltung aufweist und andererseits über die Hardwareschaltung steuerbar ist. Die Steuerungsvorrichtung kann über Befehle aus der Fahrzeugleittechnik in der Führerkabine des Schienenfahrzeuges steuerbar sein. Zusätzlich kann die Steuerungsvorrichtung über eine Hardwareschaltung, beispielsweise ein Bedienpanel oder Taster, steuerbar sein.

Gemäß einer Ausführungsform beträgt die Nennspannung an den Leistungsausgängen 24 V. Diese 24 V entsprechen typischerweise der Bordnetzspannung von Schienenfahrzeugen und damit dem vom Hersteller oder Lieferanten spezifizierten Wert der elektrischen Spannung im Normalbetrieb der Einrichtung im Schienenfahrzeug. Die Nennspannung beschreibt den Normalbetrieb, wobei es während des Betriebes zu Spannungsschwankungen kommen kann. Beispielsweise beträgt die Mindestspannung 16,8 V und die Höchstspannung 30,0 V. Gemäß einer Ausführungsform beträgt die Nennspannung an den Schalteingängen ebenso 24 V.

Die Schalteingänge können sich von den Leitungseingängen durch einen höheren Stromfluss unterscheiden. Bei gleicher Spannung resultiert daraus eine höhere Leistung. Die maximale Stromstärke bei einem mit 24 V Spannung versorgtem Schalteingang beträgt beispielsweise 0,7 A oder 0,85 A. Im Vergleich dazu kann die maximale Stromstärke an einem Leistungsausgang oder an einer Spannungsversorgung bei ebenso 24 V bei beispielsweise 1 A, 20 A oder 50 A liegen. Die benötigte Stromstärke und damit Leistung hängt von der Einrichtung ab. Während beispielsweise für das Ansteuern einer Federspeicherbremse wenig Leistung benötigt wird, wird beim Ansteuern einer Schienenbremse eine hohe Leistung benötigt.

Es wird weiterhin ein Schienenfahrzeug vorgeschlagen, wobei das Schienenfahrzeug Einrichtung und eine Ausführungsform der Steuerungsvorrichtung aufweist, wobei jeweils das Steuerungsmodul (10, 10') über den Leistungsausgang (16, 16') mit einer Einrichtung verbunden ist und diese steuern und betätigen kann. Die Einrichtungen sind dabei die Schienenbremse und die Sandung des Schienenfahrzeuges, sowie weiterhin beispielsweise die Federspeicherbremse, die Notauslösevorrichtung der Federspeicherbremse oder die Innenbeleuchtung des Schienenfahrzeuges.

### Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen ähnliche Teile.
Figur 1 zeigt ein Schienenfahrzeug gemäß einer Ausführungsform.
Figur 2 zeigt eine schematische Steuerungsvorrichtung gemäß einer Ausführungsform.
Figur 3 zeigt eine schematische Steuerungsvorrichtung gemäß einer weiteren Ausführungsform.
Figur 4 zeigt eine detaillierte Steuerungsvorrichtung gemäß einer Ausführungsform.

### Ausführungsbeispiele

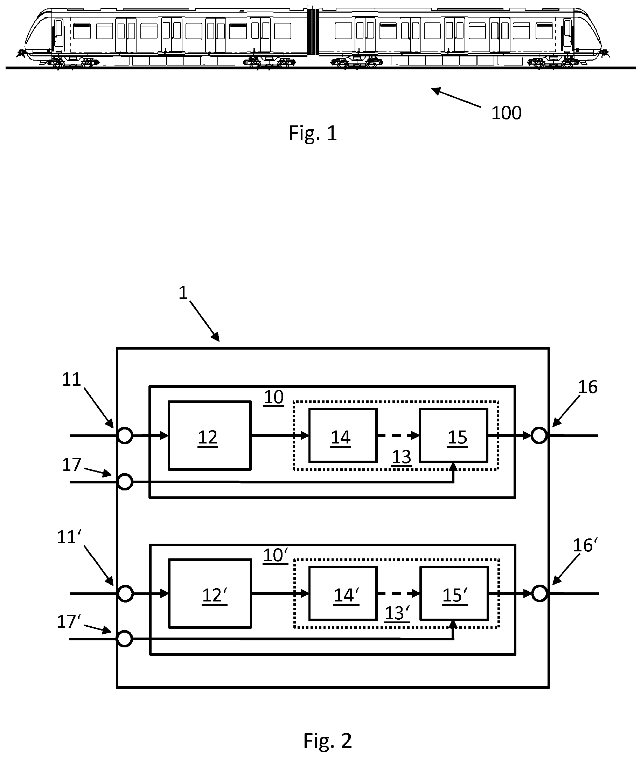

Figur 1 zeigt ein Schienenfahrzeug 100 gemäß einer Ausführungsform. Schienenfahrzeuge können insbesondere Straßenbahnen, Metros, elektrische Lokomotiven oder Hochgeschwindigkeitszüge sein. Das Schienenfahrzeug weist eine Sandung und eine Schienenbremse auf. Weiterhin kann das Schienenfahrzeug eine Federspeicherbremse, eine Notauslösevorrichtung der Federspeicherbremse oder eine Innenbeleuchtung aufweisen, die durch eine Steuerungsvorrichtung mit jeweils einem Steuerungsmodul gesteuert werden können.

Figur 2 zeigt eine Steuerungsvorrichtung zum Einbauen in ein Schienenfahrzeug und zum Betätigen von Einrichtungen in einem Schienenfahrzeug, wobei die Steuerungsvorrichtung ein Gehäuse 1 und mindestens zwei in dem Gehäuse angeordnete Steuerungsmodule 10, 10' aufweist und jedes Steuerungsmodul 10, 10' aufweist: mindestens einen Schalteingang 11, 11'; eine mit dem Schalteingang 11, 11' verbundene Logikeinheit 12, 12', die ein Signal an dem Schalteingang 11, 11' logisch verarbeiten kann; eine mit der Logikeinheit 12, 12' verbundene und durch die Logikeinheit 12, 12' steuerbare Halbleiter-Leistungsschaltvorrichtung 13, 13'; mindestens einen mit der Halbleiter-Leistungsschaltvorrichtung 13, 13' verbundenen Leistungsausgang 16, 16', wobei das erste Steuerungsmodul 10 über den Leistungsausgang 16 mit einer ersten Einrichtung eines Schienenfahrzeuges verbindbar ist und ausgebildet ist, diese zu steuern und zu betätigen, wobei das zweite Steuerungsmodul 10' über den Leistungsausgang 16' mit einer zweiten Einrichtung eines Schienenfahrzeuges verbindbar ist und ausgebildet ist, diese zu steuern und zu betätigen, und wobei die erste Einrichtung eine Sandung ist und die zweite Einrichtung eine Schienenbremse ist.

Das erste Steuerungsmodul 10 ist für eine Sandung vorgesehen und das zweite Steuerungsmodul ist für eine Schienenbremse vorgesehen.

Ein Steuerungsmodul 10, 10' weist mindestens einen Schalteingang 11, 11' auf. Weiterhin weist jedes Steuerungsmodul 10, 10' mindestens einen Leistungsausgang 16, 16' auf. Mehrere Schalteingänge 11, 11' und/oder mehrere Leistungsausgänge 16, 16' können je nach Einrichtung des Schienenfahrzeuges vorgesehen sein. Dies kann in einem konkreten Ausführungsbeispiel die Sandung jeweils Rechts und Links an zwei Achsen umfassen. Dementsprechend weist das erste Steuerungsmodul 10 dann mindestens vier Schalteingänge 11 auf. Weitere Schalteingänge 11 können beispielsweise für eine Heizung der Sanddüse vorgesehen sein. Eine andere Anzahl von Schalteingängen 11 kann in anderen Ausführungsformen beispielsweise durch eine größere Anzahl von steuerbaren Achsen oder weiteren Funktionen der Sandung entstehen. Das Steuerungsmodul 10 kann entsprechend an diese Anforderungen angepasst werden. Die Schalteingänge 11 können beispielsweise bei einer Nennspannung von 24 V und einer Stromstärke von maximal 0,7 A geschaltet werden.

Das erste Steuerungsmodul 10 kann weiterhin ein oder mehrere Spannungsversorgungen 17 aufweisen, die bei einem Schalten jeweils mit einem der Leistungsausgänge 16 verbunden werden. Beispielsweise weist das erste Steuerungsmodul 10 vier Leistungsausgänge 16 für die Sandung Rechts und Links an zwei Achsen, sowie vier weitere Leistungsausgänge für Kompressoren auf. Ein zusätzlicher Leistungsausgang 16 kann für die Heizung an allen vier Sandungen vorgesehen sein. Beispielsweise werden die Sandungen mit einer Spannung von 24 V und einer maximalen Stromstärke von 5 A betrieben. Die Kompressoren können jeweils mit 24 V und 25A betrieben werden und die Heizung mit 24 V und 10 A.

Gemäß einer Ausführungsform weist ein Steuerungsmodul 10, 10' für jeden Leistungsausgang 16, 16' eine Spannungsversorgungen 17, 17' auf, wobei jeder Leistungsausgang 16, 16' mit einer zugeordnetem Spannungsversorgungen 17, 17' durch ein Schalten der Halbleiter-Leistungsschaltvorrichtung 13, 13' elektrisch verbunden wird.

Die Nennspannungen am Schalteingang 11, 11' und am Leitungsausgang sind beispielsweise auf maximal 24V begrenzt. Dies entspricht der typischen Boardnetz-Nennspannung. Gemäß einer Ausführungsform beträgt die Nennspannung an jedem Schalteingang 11,11' und an jedem der Leistungsausgänge 16, 16' im Wesentlichen 24 V. Die Nennspannung kann dabei gering von der tatsächlichen Spannung am Verbraucher abweichen. Beispielsweise beträgt eine typische Spannung am Verbraucher 25 V bis 27 V Gleichspannung.

Das zweite Steuerungsmodul 10' kann beispielsweise zwei Leistungsausgänge 16' zum Verbinden mit dem Plus-Potential einer rechten und einer linken Schienenbremse aufweisen. Jeweils ein weiterer Ausgang für das Minus-Potential oder Null-Volt-Versorgungspotential kann ebenso ein Teil des Steuerungsmodules 10' sein, wobei dieser Ausgang nicht über eine steuerbare Halbleiter Leistungsschaltvorrichtung 13' verläuft. Alternativ kann das Minus-Potential separat zum Steuerungsmodul 10' verlaufen. Die Leistungsausgänge 16' werden bei einem Aktivieren der Schienenbremse elektrisch durch die Logikeinheit 12 und die Halbleiter-Leistungsschaltvorrichtung 13 mit jeweils einem der zwei Spannungsversorgungen 17' verbunden. Zwischen dem Potential der Spannungsversorgungen 17' und dem Null-Volt-Versorgungspotential (oder Minus-Potential) liegt eine Nennspannung von 24 V an. Die Stromstärke ist beispielsweise auf 50 A begrenzt.

In einer Gestaltungsmöglichkeit einer Schienenbremse entwickelt diese eine Bremswirkung durch einen Stromfluss durch Schienenbremsenmagnete. Die Schienenbremse umfasst einen linken und einen rechten Schienenbremsenmagneten. Bei einem Stromdurchfluss durch den Magneten wird ein Schleifkörper auf die Schiene gedrückt und das Schienenfahrzeug durch mechanische Reibung gebremst. Das zweite Steuerungsmodul 10' steuert diesen Stromfluss durch die Magneten.

Ein Signal am Schalteingang 11, 11' wird in der Logikeinheit 12, 12' verarbeitet, wodurch die steuerbare Halbleiter Leistungsschaltvorrichtung 13, 13' die Spannungsversorgungen mit den Leistungsausgängen 16, 16' elektrisch verbindet. Die Logikeinheit kann dazu insbesondere eine Gatesteuerung 14, 14' eines IGBTs 15, 15' betätigen. Dadurch kann ein Strom über den mit dem IGBT 15 verbundenen Leistungsausgang 16, 16' fließen. Bei dem zweiten Steuerungsmodul 10' fließt der Strom aus dem Leistungsausgang 16' in den Elektromagneten der Schienenbremse. Dadurch presst der Elektromagnet durch das entstehende Magnetfeld den Schleifkörper auf die Schiene und es entsteht eine Bremswirkung. Die Steuerung und damit die Veränderung der Stromstärke durch die Leistungsausgänge 16' kann kontinuierlich einstellbar sein.

Ein Steuerungsmodul 10, 10' kann zusätzlich ein oder mehrere Signalausgänge aufweisen. Ein Signalausgang kann beispielsweise beim zweiten Steuerungsmodul 10' verwendet werden, um der Fahrzeugleittechnik den Zustand der Schienenbremse mitzueilen. Der Zustand kann bei dem Signalausgang als "betriebsbereit" beschrieben werden. Ein zweiter Signalausgang kann verwendet werden, um der Fahrzeugleittechnik den Aktivitätszustand der Schienenbremse, also "aktiv" und "nicht aktiv" und damit einen tatsächlichen Bremszustand durch eine Schienenbremse, zu melden.

Die Figur 2 zeigt, dass die Steuerungsmodule 10, 10' elektrisch voneinander unabhängig sind. Die Steuerungsmodule 10, 10' teilen sich weder einen Schalteingang 11, 11' noch einen Leistungsausgang 16, 16'. Die beiden Steuerungsmodule 10, 10' können insbesondere separate Platinen aufweisen.

Ein Schalteingang 11, 11' kann insbesondere mit einer Gatesteuerung 14, 14' einer Halbleiter-Leistungsschaltvorrichtung 13, 13' verbunden sein und dadurch die Leistungsausgänge 16, 16' schalten.

Logikeinheiten 12, 12 können jeweils über die Gatesteuerungen 14, 14' mit der Halbleiter-Leistungsschaltvorrichtungen 13, 13' verbunden sein und diese über die Gatesteuerungen 14, 14' steuern. Insbesondere bei einem Leistungs-MOSFET oder einen IGBT weist die Halbleiter-Leistungsschaltvorrichtung 13, 13' eine Gatesteuerung 14, 14' auf.

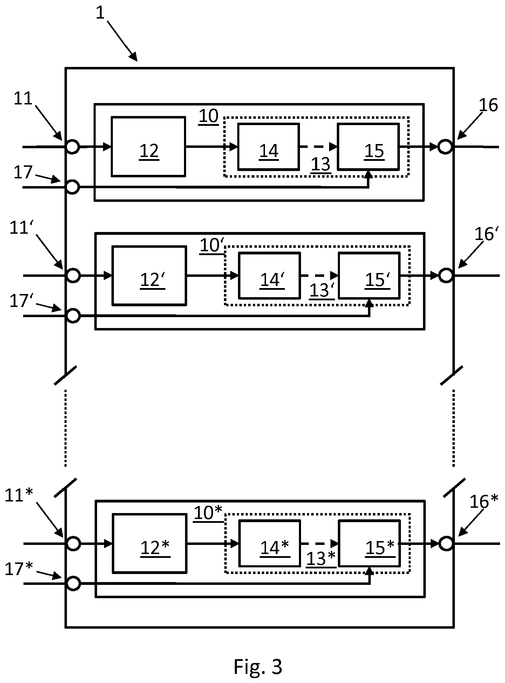

Die Figur 3 zeigt eine weitere Ausführungsform der Steuerungsvorrichtung. Die Steuerungsvorrichtung weist vergleichbar zur Figur 2 ein erstes und ein zweites Steuerungsmodul 10, 10' für eine Sandung und eine Schienenbremse auf. Weiterhin weist die Steuerungsvorrichtung in dieser Ausführungsform weitere Steuerungsmodule 10* auf.

Wie in Figur 3 angedeutet können mehrere weitere Steuerungsmodule 10* in der Steuerungsvorrichtung für weitere Einrichtungen des Schienenfahrzeuges im Gehäuse angeordnet sein. Insbesondere können ein weiteres, zwei weitere oder 3 weitere Steuerungsmodule 10* für weitere Einrichtungen des Schienenfahrzeuges vorgesehen sein, wobei die Einrichtung eine der folgenden ist: Federspeicherbremse, Notauslösevorrichtung der Federspeicherbremse, und Innenbeleuchtung.

Die Steuerungsmodule 10, 10', 10* haben den gleichen Grundaufbau, das heißt, sie haben alle jeweils mindestens einen Schalteingang 11, 11', 11*, eine mit dem Schalteingang 11, 11', 11* verbundene Logikeinheit 12, 12', 12*, die ein Signal an dem Schalteingang 11, 11', 12* logisch verarbeiten kann, eine mit der Logikeinheit 12, 12', 12* verbundene und durch die Logikeinheit 12, 12', 12* steuerbare Halbleiter-Leistungsschaltvorrichtung 13, 13', 13*, mindestens einen mit der Halbleiter-Leistungsschaltvorrichtung 13, 13', 13* verbundenen Leistungsausgang 16, 16', 16*. Jedes Steuerungsmodule 10, 10', 10* ist für eine Einrichtung des Schienenfahrzeuges vorgesehen und ausgebildet, diese zu steuern und zu betätigen. Die Steuerungsmodule 10, 10', 10* sind an die jeweilige Einrichtung angepasst können unterschiedliche Anzahlen von Schalteingängen 11, 11', 11*, Halbleiter-Leistungsschaltvorrichtungen 13, 13', 13*, und Leistungsausgängen 16, 16', 16* aufweisen. Die Logikeinheiten 12, 12', 12* sind darauf und auf die jeweilige Funktion der Einrichtung angepasst. Ein Steuerungsmodul 10, 10', 10* für eine Einrichtung unterscheidet sich im Allgemeinen von einem anderen Steuerungsmodul 10, 10', 10* für eine andere Einrichtung und ist für diese ungeeignet.

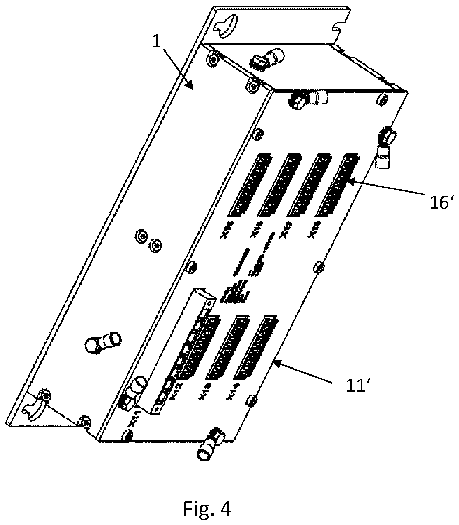

Figur 4 zeigt eine detaillierte Steuerungsvorrichtung gemäß einer weiteren Ausführungsform. Es sind Schalteingang 11, 11' und Leistungsausgang 16, 16' als Steckverbindungen im Gehäuse 1 dargestellt. Das Gehäuse 1 weist beispielsweise ein Blech, insbesondere mit einer elektrischen Erdung, oder einen Kunststoff auf. Die Steuerungsvorrichtung kann in ein Schienenfahrzeug 100 eingebaut werden. Dazu können Befestigungsmittel an dem Gehäuse vorgesehen sein.

Zum Anschließen der Einrichtungen im Schienenfahrzeug an die Steuerungsvorrichtung können Klemmen und/oder Steckverbindungen verwendet werden. Beispielsweise werden zehn Klemmen zu einem Steckverbindungsblock zusammengefasst. Die Steckverbindungen können eine Steckercodierung aufweisen, sodass sich Steckverbindungen eines Steuermodules von Steckverbindungen eines anderen Steuermodules mechanisch unterscheiden. Durch eine mechanische Codierung ist die Steuerungsvorrichtung gegen das Vertauschen von Steckern und damit ein Verbinden eines Steuerungsmodules 10, 10', 10* an eine falsche Einrichtung abgesichert.

Die Steuerungsvorrichtung ist vorteilhaft kompakt und hat beispielsweise eine maximale Länge von 500 mm und eine maximale Breite und Tiefe von 210 mm. Das Maximalgewicht kann auf 6 kg beschränkt sein. Die Steuerungsvorrichtung bündelt mehreren Steuerungsmodule 10, 10', 10* kompakt in einem Gehäuse und bietet einen Platzvorteil gegenüber konventionellen Schaltgeräten, zum Beispiel Relaisanordnungen, und erhält die Anforderungen an ein abgesichertes Betreiben der Einrichtungen.

## Patentansprüche

1. Steuerungsvorrichtung zum Einbauen in ein Schienenfahrzeug und zum Betätigen von Einrichtungen in dem Schienenfahrzeug, wobei die Steuerungsvorrichtung ein Gehäuse (1) und mindestens zwei in dem Gehäuse angeordnete Steuerungsmodule (10, 10') aufweist und jedes Steuerungsmodul (10, 10') aufweist:
- mindestens einen Schalteingang (11, 11');
- eine mit dem Schalteingang (11, 11') verbundene Logikeinheit (12, 12'), die ein Signal an dem Schalteingang (11, 11') logisch verarbeiten kann;
- eine mit der Logikeinheit (12, 12') verbundene und durch die Logikeinheit (12, 12') steuerbare Halbleiter-Leistungsschaltvorrichtung (13, 13');
- mindestens einen mit der Halbleiter-Leistungsschaltvorrichtung (13, 13') verbundenen Leistungsausgang (16, 16'),
wobei das erste Steuerungsmodul (10) über den Leistungsausgang (16) mit einer ersten Einrichtung des Schienenfahrzeuges verbindbar ist und ausgebildet ist, diese zu steuern und zu betätigen,
wobei das zweite Steuerungsmodul (10') über den Leistungsausgang (16') mit einer zweiten Einrichtung des Schienenfahrzeuges verbindbar ist und ausgebildet ist, diese zu steuern und zu betätigen, und
wobei die erste Einrichtung eine Sandung ist und die zweite Einrichtung eine Schienenbremse ist.

2. Steuerungsvorrichtung nach Anspruch 1, wobei die Steuerungsmodule (10, 10') jeweils separate Platinen aufweisen, auf denen die Logikeinheiten (12, 12') aufgebracht ist.

3. Steuerungsvorrichtung nach einem der vorherigen Ansprüche, weiterhin aufweisend mindestens ein drittes in dem Gehäuse (1) angeordnetes Steuerungsmodul (10"), wobei das dritte Steuerungsmodul (10") über seinen Leistungsausgang (16") mit einer dritten Einrichtung des Schienenfahrzeuges verbindbar ist und ausgebildet ist, diese zu steuern und zu betätigen, wobei die dritte Einrichtung eine der folgenden ist: Federspeicherbremse, Notauslösevorrichtung der Federspeicherbremse, und Innenbeleuchtung.

4. Steuerungsvorrichtung nach Anspruch 3, weiterhin aufweisend ein viertes in dem Gehäuse (1) angeordnetes Steuerungsmodul (10""), wobei das vierte Steuerungsmodul über seinen Leistungsausgang (10"") mit einer weiteren der genannten Vorrichtungen verbindbar ist und ausgebildet ist, diese zu steuern und zu betätigen.

5. Steuerungsvorrichtung nach einem der vorherigen Ansprüche, wobei das Gehäuse (1) Verbindungselemente nach außen zum elektrischen Verbinden mit einer Einrichtung in einem Schienenfahrzeug aufweist und die Schalteingänge (11, 11') der Steuerungsmodule (10, 10') jeweils an ein eigenes Verbindungselement im Innenraum des Gehäuses (1) angeschlossen sind.

6. Steuerungsvorrichtung nach Anspruch 5, wobei die Verbindungselemente Steckverbindungen sind und die Steckverbindungen eine Steckercodierung aufweisen.

7. Steuerungsvorrichtung nach einem der vorherigen Ansprüche, wobei jede Halbleiter-Leistungsschaltvorrichtung (13, 13') einen Leistungs-MOSFET (15, 15') oder einen IGBT (15, 15') aufweist.

8. Steuerungsvorrichtung nach einem der vorherigen Ansprüche, wobei jede Halbleiter-Leistungsschaltvorrichtung (13, 13') eine Gatesteuerung (14, 14') aufweist und die Logikeinheiten (12, 12') jeweils über die Gatesteuerungen (14, 14') mit der Halbleiter-Leistungsschaltvorrichtungen (13, 13') verbunden sind und diese über die Gatesteuerungen (14, 14') steuern.

9. Steuerungsvorrichtung nach einem der vorherigen Ansprüche, wobei in jedes Steuerungsmodul (10, 10') eine Überwachungsfunktion integriert ist, die die Plausibilität des Signales an dem jeweiligen Schalteingang (11, 11') und des dazugehörigen Zustandes des Leistungsausganges (16, 16') überwacht.

10. Steuerungsvorrichtung nach einem der vorherigen Ansprüche, weiterhin aufweisend:
- eine Kühlvorrichtung zum Kühlen des Innenbereiches des Gehäuses (1), insbesondere zum Kühlen einer der steuerbaren Halbleiter-Leistungsschaltvorrichtung (13, 13').

11. Steuerungsvorrichtung nach einem der vorherigen Ansprüche, wobei die Logikeinheiten (12, 12') aus fest verdrahteten Logikgattern aufgebaut ist.

12. Steuerungsvorrichtung nach einem der vorherigen Ansprüche, wobei die Steuerungsvorrichtung mit der Fahrzeugleittechnik eines Schienenfahrzeuges verbindbar und einerseits über diese steuerbar ist und wobei die Steuerungsvorrichtung weiterhin eine Hardwareschaltung aufweist und andererseits über die Hardwareschaltung steuerbar ist.

13. Steuerungsvorrichtung nach einem der vorherigen Ansprüche, wobei die Signalverarbeitung in jedem Steuerungsmodul (10, 10') vom dem Schalteingang (11, 11') zu dem Leistungsausgang (16, 16') dem Standard nach EN 50129:2003 entspricht.

14. Steuerungsvorrichtung nach einem der vorherigen Ansprüche, wobei die Nennspannung an den Leistungsausgängen (16, 16') bei 24 V liegt.

15. Schienenfahrzeug mit Einrichtungen und einer Steuerungsvorrichtung nach einem der vorherigen Ansprüche, wobei jeweils das Steuerungsmodul (10, 10') über den Leistungsausgang (16, 16') mit den Einrichtungen verbunden ist und diese steuern und betätigen kann.

## Claims

1. Control device for installation in a rail vehicle and for actuating devices in the rail vehicle, the control device comprising a housing (1) and at least two control modules (10, 10') arranged in the housing, each control module (10, 10') having
- at least one switching input (11, 11');
- a logic unit (12, 12') connected to the switching input (11, 11') and capable of logically processing a signal at the switching input (11, 11'); and
- a semiconductor power switching device (13, 13') connected to the logic unit (12, 12') and controllable by the logic unit (12, 12');
- at least one power output (16, 16') connected to the semiconductor power switching device (13, 13'),
wherein the first control module (10) is connectable via the power output (16) to a first device of the rail vehicle and is adapted to control and actuate the same,
wherein the second control module (10') is connectable via the power output (16') to a second device of the rail vehicle and is configured to control and actuate the same, and
wherein the first device is a sanding device and the second device is a rail brake.

2. Control device according to claim 1, wherein the control modules (10, 10') each comprise separate circuit boards on which the logic units (12, 12') are mounted.

3. Control device according to any one of the preceding claims, further comprising at least a third control module (10") arranged in the housing (1), wherein the third control module (10") is connectable via its power output (16") to a third device of the rail vehicle and is configured to control and actuate the same, wherein the third device is one of the following: spring brake, emergency release device of the spring brake, and interior lighting.

4. Control device according to claim 3, further comprising a fourth control module (10"") arranged in the housing (1), wherein the fourth control module is connectable via its power output (10"") to a further one of said devices and is configured to control and actuate the same.

5. Control device according to one of the preceding claims, wherein the housing (1) has connecting elements to the outside for electrical connection to a device in a rail vehicle and the switching inputs (11, 11') of the control modules (10, 10') are each connected to their own connecting element in the interior of the housing (1).

6. Control device according to claim 5, wherein the connecting elements are plug connections and the plug connections have a plug coding.

7. Control device according to any one of the preceding claims, wherein each semiconductor power switching device (13, 13') comprises a power MOSFET (15, 15') or an IGBT (15, 15').

8. Control device according to any one of the preceding claims, wherein each semiconductor power switching device (13, 13') comprises a gate controller (14, 14') and the logic units (12, 12') are respectively connected to and control the semiconductor power switching device (13, 13') via the gate controllers (14, 14').

9. Control device according to one of the preceding claims, wherein a monitoring function is integrated in each control module (10, 10'), which monitors the plausibility of the signal at the respective switching input (11, 11') and the associated state of the power output (16, 16').

10. Control device according to any one of the preceding claims, further comprising:
- a cooling device for cooling the interior of the housing (1), in particular for cooling one of the controllable semiconductor power switching devices (13, 13').

11. Control device according to any one of the preceding claims, wherein the logic units (12, 12') are constructed of hard-wired logic gates.

12. Control device according to one of the preceding claims, wherein the control device can be connected to the vehicle control system of a rail vehicle and on the one hand can be controlled via the same, and wherein the control device further comprises a hardware circuit and wherein the control device can be on the other hand controlled via the hardware circuit.

13. Control device according to one of the preceding claims, wherein the signal processing in each control module (10, 10') from the switching input (11, 11') to the power output (16, 16') complies with the standard according to EN 50129:2003.

14. Control device according to any of the preceding claims, wherein the nominal voltage at the power outputs (16, 16') is 24 V.

15. Rail vehicle with devices and a control device according to one of the previous claims, wherein the control module (10, 10') is connected to the devices via the power output (16, 16') in each case and can control and actuate the devices.

## Revendications

1. Dispositif de commande destiné à l'installation dans un véhicule ferroviaire et à l'actionnement d'appareils dans le véhicule ferroviaire, le dispositif de commande présentant un boîtier (1) et au moins deux modules de commande (10, 10') disposés dans le boîtier et chaque module de commande (10, 10') présentant :
- au moins une entrée de commutation (11, 11') ;
- une unité logique (12, 12') reliée à l'entrée de commutation (11, 11') et qui peut traiter logiquement un signal à l'entrée de commutation (11, 11') ;
- un dispositif de commutation de puissance à semi-conducteur (13, 13') relié à l'unité logique (12, 12') et pouvant être commandé par l'unité logique (12, 12') ;
- au moins une sortie de puissance (16, 16') reliée au dispositif de commutation de puissance à semi-conducteur (13, 13'),
dans lequel le premier module de commande (10) peut être relié à un premier appareil du véhicule ferroviaire par l'intermédiaire de la sortie de puissance (16) et est conçu pour commander et faire fonctionner celui-ci,
dans lequel le deuxième module de commande (10') peut être relié à un deuxième appareil du véhicule ferroviaire par l'intermédiaire de la sortie de puissance (16') et est conçu pour commander et faire fonctionner celui-ci, et
dans lequel le premier appareil est une sablière et le deuxième appareil est un frein sur rail.

2. Dispositif de commande selon la revendication 1, dans lequel les modules de commande (10, 10') présentent respectivement des cartes de circuit imprimé séparées sur lesquelles sont montées les unités logiques (12, 12').

3. Dispositif de commande selon l'une des revendications précédentes, présentant en outre au moins un troisième module de commande (10") disposé dans le boîtier (1), le troisième module de commande (10") pouvant être relié à un troisième appareil du véhicule ferroviaire par l'intermédiaire de sa sortie de puissance (16") et étant conçu pour commander et faire fonctionner celui-ci, le troisième appareil étant l'un des suivants : frein d'accumulateur à ressort, dispositif de déclenchement d'urgence du frein d'accumulateur à ressort et éclairage intérieur.

4. Dispositif de commande selon la revendication 3, présentant en outre un quatrième module de commande (10"") disposé dans le boîtier (1), le quatrième module de commande pouvant être relié à un autre desdits appareils par l'intermédiaire de sa sortie de puissance (10'''') et étant conçu pour commander et faire fonctionner ceux-ci.

5. Dispositif de commande selon l'une des revendications précédentes, dans lequel le boîtier (1) présente des éléments de liaison vers l'extérieur destinés au raccordement électrique à un appareil dans un véhicule ferroviaire et les entrées de commutation (11, 11') des modules de commande (10, 10') sont raccordées respectivement à un élément de liaison distinct dans l'espace intérieur du boîtier (1).

6. Dispositif de commande selon la revendication 5, dans lequel les éléments de liaison sont des liaisons enfichables et les liaisons enfichables présentent un codage d'enfichage.

7. Dispositif de commande selon l'une des revendications précédentes, dans lequel chaque dispositif de commutation de puissance à semi-conducteur (13, 13') présente un MOSFET de puissance (15, 15') ou un IGBT (15, 15').

8. Dispositif de commande selon l'une des revendications précédentes, dans lequel chaque dispositif de commutation de puissance à semi-conducteur (13, 13') présente une commande de grille (14, 14') et les unités logiques (12, 12') sont respectivement reliées aux dispositifs de commutation de puissance à semi-conducteur (13, 13') par l'intermédiaire des commandes de grille (14, 14') et commandent ceux-ci par l'intermédiaire des commandes de grille (14, 14').

9. Dispositif de commande selon l'une des revendications précédentes, dans lequel une fonction de surveillance est intégrée dans chaque module de commande (10, 10') et surveille la plausibilité du signal à l'entrée de commutation (11, 11') respective et l'état associé de la sortie de puissance (16, 16').

10. Dispositif de commande selon l'une des revendications précédentes, présentant en outre :
- un dispositif de refroidissement destiné à refroidir la zone intérieure du boîtier (1), en particulier à refroidir l'un des dispositifs de commutation de puissance à semi-conducteur (13, 13') pouvant être commandés.

11. Dispositif de commande selon l'une des revendications précédentes, dans lequel les unités logiques (12, 12') sont constituées de portes logiques câblées à demeure.

12. Dispositif de commande selon l'une des revendications précédentes, dans lequel le dispositif de commande peut être relié au système de guidage de véhicule d'un véhicule ferroviaire et peut être commandé par l'intermédiaire de celui-ci d'une part et dans lequel le dispositif de commande présente en outre un circuit matériel et peut être commandé par l'intermédiaire du circuit matériel d'autre part.

13. Dispositif de commande selon l'une des revendications précédentes, dans lequel le traitement du signal correspond, dans chaque module de commande (10, 10') depuis l'entrée de commutation (11, 11') jusqu'à la sortie de puissance (16, 16'), à la norme EN 50129:2003.

14. Dispositif de commande selon l'une des revendications précédentes, dans lequel la tension nominale aux sorties de puissance (16, 16') est de 24 V.

15. Véhicule ferroviaire comportant des appareils et un dispositif de commande selon l'une des revendications précédentes, le module de commande (10, 10') étant respectivement relié aux appareils par l'intermédiaire de la sortie de puissance (16, 16') et pouvant commander et faire fonctionner ceux-ci.
